# EUROPEAN PATENT APPLICATION

(11) **EP 4 447 038 A1**
(43) Date of publication of application: **16.10.2024**
(21) Application number: 22903827.8
(22) Date of filing: 27.09.2022
(51) Int. Cl.: G10K 15/04

(54) **AUDIO DEVICE, PROGRAM, AND AUDIO REPRODUCTION METHOD**

(30) Priority: 06.12.2021 JP 2021198012
(71) Applicant: D&M Holdings Inc., Kawasaki-shi Kanagawa 210-8569 (JP)
(72) Inventor: KUNIMOTO Toshiki, Kawasaki-shi, Kanagawa 210-8569 (JP)
(74) Representative: Mewburn Ellis LLP
(86) International application number: PCT/JP2022/035839
(87) International publication number: WO 2023/105893

(57) **Abstract**

To provide audio reproduction technology by which audio data of high sound quality such as high-resolution audio can be reproduced with sound quality suited for background music (BGM).

[Solution] A main control unit 18 sets an operation mode of a wireless audio player 1 to a normal mode or a BGM mode. When the operation mode of the wireless audio player 1 is set to BGM mode, an effect processing unit 16 subjects an audio signal that has been inputted from an audio reproduction unit 12 through a mode switching unit 17, the audio signal being a reproduction signal of audio data to be reproduced, to an effect process on the basis of music information of audio data to be reproduced as notified by a music information acquisition unit 14, and outputs the result from a speaker unit 13, the effect process including at least any one selected from dynamic range compression, high frequency and low frequency cutting, the addition of distortion, the addition of bubble popping noise, and a change in the reproduction pitch.

## Description

### Technical Field

The present invention relates to an audio playback technology, and more particularly, to an audio playback technology suitable for background music (BGM) playback.

### Background Art

Hitherto, an audio device that acquires audio data of a piece of music from a media server via a wireless network, such as a wireless local area network (LAN) or Bluetooth (trademark), and plays back and outputs the piece of music has been known (e.g., Patent Literature 1). In recent years, as wireless networks have become wider in bandwidth, the audio data distributed by media servers is becoming higher in sound quality, and this type of audio device is also becoming spread to support audio data with higher resolution, which is called high-resolution audio, for example.

### Citation List

### Patent Literature

[PTL 1] US 7987294 B2

### Summary of Invention

### Technical Problem

Incidentally, playing back high-quality audio data as BGM to be used at the time of working (job, study, or the like) or sleeping may be a positive disturbance to working or sleeping. In particular, when high-quality audio data of digitally-remastered old pieces of music (so-called "nostalgic music") is played back, the user may listen to such pieces of music attentively, and thus the user may be unable to concentrate on his or her work or unable to fall asleep.

In addition, high-quality audio data of a specific genre, such as classical music, generally has a wider dynamic range, and hence it is difficult to adjust the volume to an appropriate level for BGM to be used at the time of working or sleeping. That is, in a case in which high-quality audio data with a wider dynamic range is played back, when the volume is reduced so that the sound of signals with high sound pressure does not disturb the user at the time of working or sleeping, the sound of signals with low sound pressure cannot be heard, and thus the sound is interrupted. This interruption of sound may make the user uncomfortable and interfere with working or sleeping.

The present invention has been made in view of the above-mentioned circumstances, and an object thereof is to provide an audio playback technology capable of playing back high-quality audio data such as high-resolution audio in a sound quality suitable for BGM.

### Solution to Problem

In order to solve the above-mentioned problems, in the present invention, during a BGM mode, based on music information or an analysis result of a melody of audio data to be played back, effect processing including at least one of dynamic range compression, high/low band frequency cut, distortion addition, petit noise (click noise) addition, or playback pitch change is performed on this audio data to be played back. The audio data that has been subjected to the effect processing is then played back and output.

For example, according to the present invention, there is provided an audio device for playing back and outputting audio data, the audio device including: mode setting means for setting an operation mode to a normal mode or a background music (BGM) mode; and effect processing means for performing, when the operation mode is set to the BGM mode by the mode setting means, based on music information or an analysis result of a melody of audio data to be played back, effect processing including at least one of dynamic range compression, high/low band frequency cut, distortion addition, petit noise addition, or playback pitch change, on the audio data to be played back.

### Advantageous Effects of Invention

In the present invention, during the BGM mode, based on the music information or the analysis result of the melody of the audio data to be played back, the effect processing including at least one of the dynamic range compression, the high/low band frequency cut, the distortion addition, the petit noise addition, or the playback pitch change is performed on this audio data to be played back.

This makes it possible, for example, to play back and output digitally-remastered old pieces of music with a sound quality as if the pieces of music were played back on an audio device (a record player, a cassette tape recorder, or the like) of those days. This can prevent the occurrence of a situation in which the user attentively listens to the digitally-remastered old piece of music with a high sound quality, resulting in disturbance of working or sleeping. In addition, it is possible to play back and output a high-quality piece of music with a wider dynamic range, such as classical music, without interruption of sound even when the volume is reduced to a level suitable for BGM through dynamic range compression. This can prevent disturbance of working or sleeping of the user by discomfort caused by interruption of sound.

Thus, according to the present invention, it is possible to play back high-quality audio data in a sound quality suitable for BGM.

### Brief Description of Drawings

FIG. 1 is a schematic configuration diagram of a wireless audio system in one embodiment of the present invention.
FIG. 2 is a schematic functional configuration diagram of a wireless audio player (1).
FIG. 3 is an explanatory flow chart for illustrating operation mode setting processing of the wireless audio player (1) .
FIG. 4 is an explanatory flow chart for illustrating audio playback processing of the wireless audio player (1).
FIG. 5 is an explanatory flow chart for illustrating BGM mode playback processing (Step S22) illustrated in FIG. 4.

### Description of Embodiments

Now, one embodiment of the present invention is described with reference to the accompanying drawings.

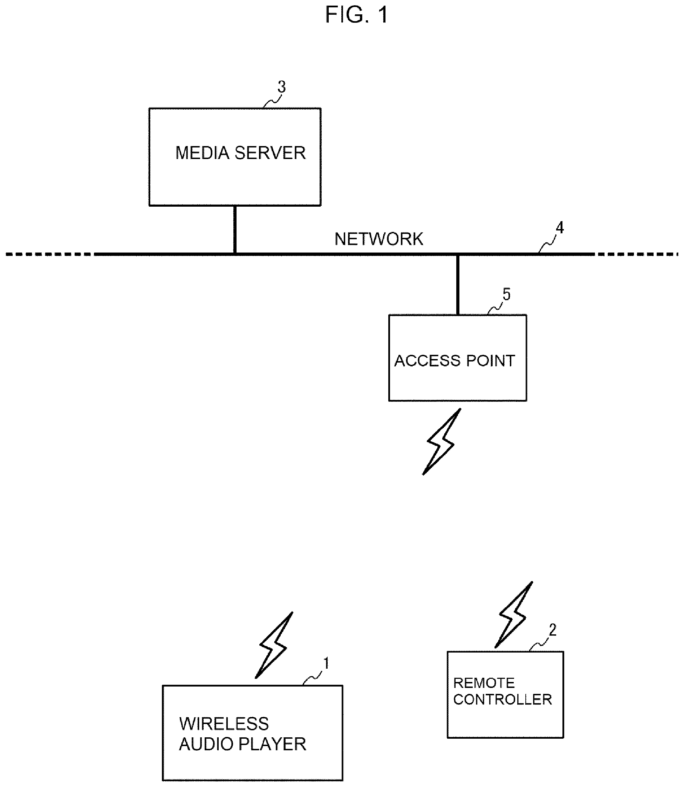

FIG. 1 is a schematic configuration diagram of a wireless audio system in this embodiment.

As illustrated in the figure, the wireless audio system in this embodiment includes a wireless audio player 1, a remote controller 2, and a media server 3.

The media server 3 is connected to the wireless audio player 1 via a network 4, such as a wide area network (WAN) or a LAN, and an access point 5, and audio data of pieces of music including high-quality audio data such as high-resolution audio is distributed to the wireless audio player 1.

The remote controller 2 is used by a user to remotely control the wireless audio player 1 and is implemented by executing a predetermined program (application software) on a portable terminal, such as a smartphone or a tablet PC, in addition to a dedicated device.

The wireless audio player 1 is an audio device that supports audio data of high-quality pieces of music such as high-resolution audio, and downloads audio data of pieces of music from the media server 3 to play back and output the audio data. Further, the wireless audio player 1 has a normal mode and a BGM mode as operation modes, and when the operation mode is set to the BGM mode, the audio data of a piece of music downloaded from the media server 3 is processed to data having a sound quality suitable for BGM, and then the processed audio data is played back and output.

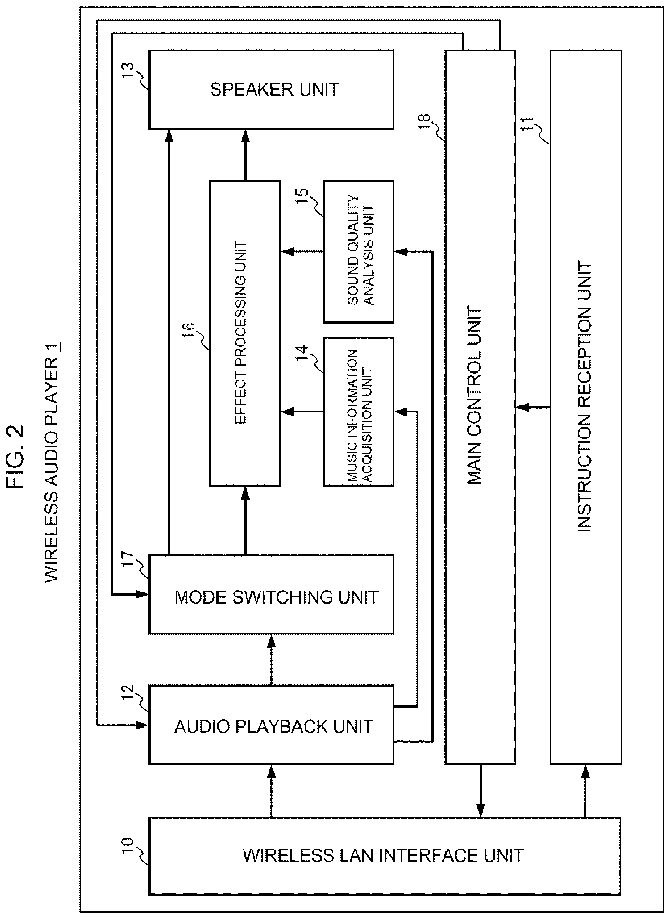

FIG. 2 is a schematic functional configuration diagram of the wireless audio player 1.

As illustrated in the figure, the wireless audio player 1 includes a wireless LAN interface unit 10, an instruction reception unit 11, an audio playback unit 12, a speaker unit 13, a music information acquisition unit 14, a sound quality analysis unit 15, an effect processing unit 16, a mode switching unit 17, and a main control unit 18.

The wireless LAN interface unit 10 is an interface for communicating to and from the media server 3 via the access point 5 and the network 4, or to and from the remote controller 2 via the access point 5, by way of a wireless LAN.

The instruction reception unit 11 receives various instructions, such as a playback instruction and an operation mode setting instruction, from the remote controller 2 via the wireless LAN interface unit 10.

The audio playback unit 12 plays back audio data to be played back that has been input, and outputs an audio signal being a playback signal to the mode switching unit 17.

The speaker unit 13 audibly outputs audio signals that have been output from the mode switching unit 17 or the effect processing unit 16.

The music information acquisition unit 14 acquires music information attached to the audio data to be played back, and notifies the effect processing unit 16 of a release year of a piece of music contained in this music information.

The sound quality analysis unit 15 analyzes a sound quality of the audio data to be played back, and notifies the effect processing unit 16 of the analysis result. Specifically, the sound quality analysis unit 15 analyzes a dynamic range, a frequency band, and noise components of the audio data, and notifies the effect processing unit 16 of the analysis result.

The effect processing unit 16 performs effect processing on the input audio signal (playback signal) based on the release year of the piece of music as notified by the music information acquisition unit 14 and the analysis result of the sound quality as notified by the sound quality analysis unit 15. The effect processing unit 16 then outputs the audio signal that has been subjected to the effect processing to the speaker unit 13.

Specifically, the effect processing unit 16 selects at least one kind of effect processing to be applied to the audio signal, based on the age to which the release year of the piece of music belongs as notified by the music information acquisition unit 14, from among dynamic range compression, high/low band frequency cut, distortion addition, petit noise addition, and playback pitch change. An example of the correspondence relation between the age of the piece of music and the effect processing to be applied is shown in Table 1.

**Table 1**

| Age | Effect(s) to be applied |
|---|---|
| Pre-1970s | dynamic range compression, high/low band frequency cut, distortion addition, petit noise addition, playback pitch change |
| 1980s to 1990s | dynamic range compression, high/low band frequency cut |
| From 2000s | dynamic range compression |

Here, the "dynamic range compression" compresses the dynamic range of an audio signal. Through application of the "dynamic range compression," audio signals can be converted to a more uniform sound with a smaller difference in sound pressure, resulting in preventing interruption of sound at the time of output at low volume.

The "high/low band frequency cut" cuts high frequency components (above 7.5 kHz) and low frequency components (below 20 Hz) outside the frequency band that AM radio broadcasts, for example, can transmit, from audio signals. Through application of the "high/low band frequency cut," audio signals can be output with a sound quality as if listening to an AM radio broadcast, for example.

The "distortion addition" adds distortion (sound crack) to audio signals by clipping. Through application of the "distortion addition," audio signals can be output with a sound quality as if the audio signals were output from aged speakers.

The "petit noise addition" adds petit noise (click noise) to audio signals. Through application of the "petit noise addition," audio signals can be output with a sound quality as if an analog record with scratches were being played back on a record player.

The "playback pitch change" changes the playback pitch (pitch of sound) of audio signals. Through application of the "playback pitch change," audio signals can be output with a sound quality as if the audio signals were being played back on a record player or a cassette tape recorder with large wow and flutter.

As shown in Table 1, at least one kind of appropriate effect processing is selected from among dynamic range compression, high/low band frequency cut, distortion addition, petit noise addition, and playback pitch change based on the release age of the audio data to be played back, and the selected effect processing is performed on the playback signal of this audio data. This makes it possible to output digitally-remastered old pieces of music (pieces of music of pre-1990s, for example) with a sound quality as if the pieces of music were played back on an audio device (a record player, a cassette tape recorder, or the like) of those days. For pieces of music in recent years (pieces of music from 2000s, for example), the dynamic range compression enables conversion to more uniform sound with less difference in sound pressure, and output without interruption of sound even when the volume is reduced to a level suitable for BGM.

The effect processing unit 16 determines whether or not to perform the effect processing selected based on the release age of the audio data to be played back, based on the analysis result of the sound quality notified by the sound quality analysis unit 15.

Specifically, when the dynamic range of the audio data to be played back is narrower than a predetermined width, that is, when the output can be made without interruption of sound even when the volume is reduced to a level suitable for BGM, the application of the effect processing of "dynamic range compression" is omitted. Further, when the audio data to be played back does not contain predetermined high and low frequency components (for example, high and low frequency components that cannot be transmitted by AM radio broadcasting), the application of the effect processing of "high/low band frequency cut" is omitted. Further, when the audio data to be played back contains noise components at a predetermined rate, the application of the effect processing of each of "distortion addition" and "petit noise addition" is omitted. Accordingly, further degradation of this audio signal being the playback signal can be prevented when the audio data to be played back originally has a sound quality suitable for BGM (for example, when the audio data is from an old piece of music that has not been digitally-remastered) .

The mode switching unit 17 switches the output destination of audio signals input from the audio playback unit 12 depending on the operation mode. Specifically, when the operation mode is set to the normal mode, the audio signals input from the audio playback unit 12 are output to the speaker unit 13. Further, when the operation mode is set to the BGM mode, the mode switching unit 17 outputs the audio signals input from the audio playback unit 12 to the effect processing unit 16.

The main control unit 18 then totally controls each of the units 10 to 17 of its own wireless audio player 1 to perform processing in accordance with the various instructions received by the instruction reception unit 11.

The functional configuration of the wireless audio player 1 illustrated in FIG. 2 may be implemented by hardware through use of an integrated logic IC such as an application specific integrated circuit (ASIC) or a field programmable gate array (FPGA), or may be implemented by software through use of a computer such as a digital signal processor (DSP). Alternatively, the functional configuration may be implemented by a general computer such as a PC, including a CPU, a memory, a flash memory, an auxiliary storage device such as a hard disk drive, a communication device such as a wireless LAN adaptor, and a speaker, causing the CPU to load a predetermined program onto the memory from the auxiliary storage device and execute the program.

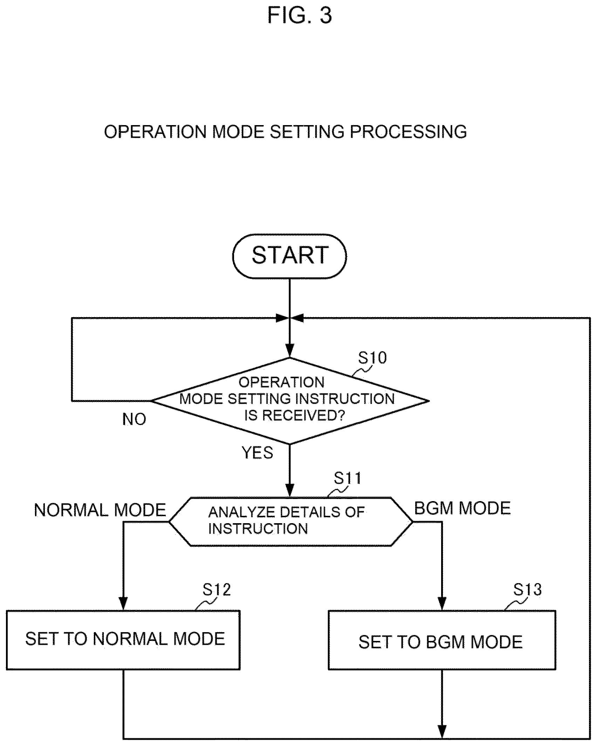

FIG. 3 is an explanatory flow chart for illustrating operation mode setting processing of the wireless audio player 1.

When the instruction reception unit 11 receives an operation mode setting instruction with designation of the operation mode from the remote controller 2 via the wireless LAN interface unit 10 (YES in Step S10), the instruction reception unit 11 notifies the main control unit 18 of this operation mode setting instruction. The main control unit 18 analyzes details of the instruction of the operation mode setting instruction received from the instruction reception unit 11 (Step S11), and when the normal mode is designated ("normal mode" in Step S11), sets the operation mode of its own wireless audio player 1 to the normal mode, and switches the output destination of the mode switching unit 17 to the speaker unit 13 (Step S12). Meanwhile, when the BGM mode is designated ("BGM mode" in Step S11), the operation mode of its own wireless audio player 1 is set to the BGM mode and the output destination of the mode switching unit 17 is switched to the effect processing unit 16 (Step S13).

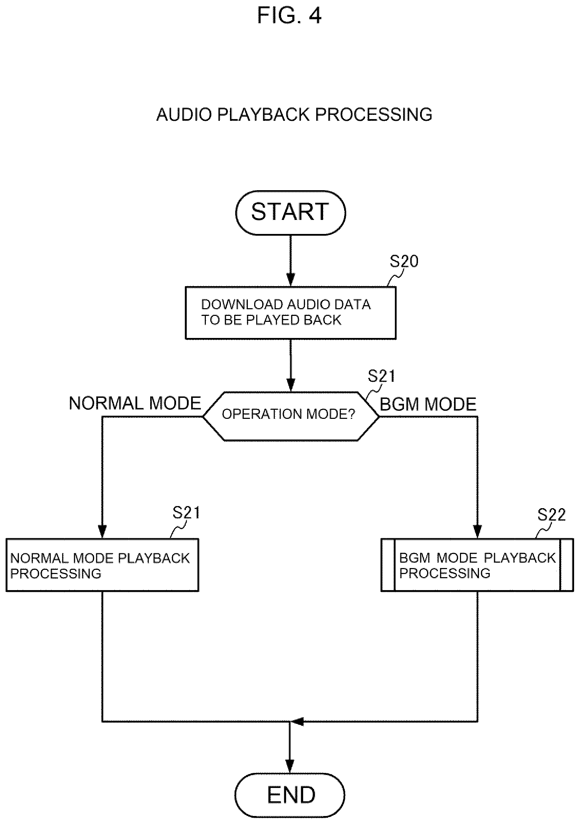

FIG. 4 is an explanatory flow chart for illustrating audio playback processing of the wireless audio player 1.

This flow is initiated when the instruction reception unit 11 receives a playback instruction with the designation of the playback target from the remote controller 2 via the wireless LAN interface unit 10.

First, the instruction reception unit 11 passes the playback instruction received from the remote controller 2 to the main control unit 18. In response to this, the main control unit 18 accesses the media server 3 via the wireless LAN interface unit 10 and downloads the audio data to be played back designated in this playback instruction from the media server 3 together with its music information (Step S20). When the operation mode of its own wireless audio player 1 is set to the normal mode ("normal mode" in Step S21), the audio data to be played back downloaded from the media server 3 is played back in the normal mode (Step S21). That is, the audio data to be played back downloaded from the media server 3 is played back in the audio playback unit 12, and the audio signal being the playback signal is output from the speaker unit 13 via the mode switching unit 17. Meanwhile, when the operation mode of its own wireless audio player 1 is set to the BGM mode ("BGM mode" in Step S21), the audio data to be played back downloaded from the media server 3 is played back in the BGM mode (Step S22).

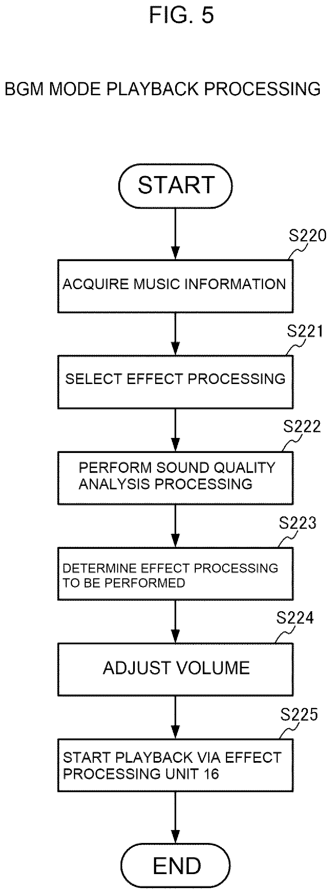

FIG. 5 is an explanatory flow chart for illustrating BGM mode playback processing (Step S22) illustrated in FIG. 4.

First, the music information acquisition unit 14 acquires, via the audio playback unit 12, the music information attached to the audio data to be played back downloaded from the media server 3, and notifies the effect processing unit 16 of the release year of the piece of music contained in the music information (Step S220). In response to this, the effect processing unit 16 selects at least one kind of effect processing to be applied to the audio signal based on the age to which the release year of the piece of music notified by the music information acquisition unit 14 belongs, in the manner described above, from among dynamic range compression, high/low band frequency cut, distortion addition, petit noise addition, and playback pitch change (Step S221).

Next, the sound quality analysis unit 15 analyzes the sound quality of the audio data to be played back, and notifies the effect processing unit 16 of the analysis result (Step S222). In response to this, the effect processing unit 16 determines whether or not the effect processing selected in Step S221 is to be performed based on the analysis result of the sound quality notified by the sound quality analysis unit 15, in the manner described above (Step S223). It is thus determined whether or not the effect processing to be applied to the audio signal, which is the playback signal of the audio data to be played back, is to be performed.

Then, the audio playback unit 12 adjusts the playback volume to a predetermined volume set in advance as the volume of the BGM (Step S224), and starts playing back the audio data to be played back (Step S225). The audio signal, which is the playback signal of the audio data to be played back, is input to the effect processing unit 16 via the mode switching unit 17, and is output from the speaker unit 13 after the effect processing to be performed is applied when the effect processing to be performed requires to be performed.

Description has been given above of the one embodiment of the present invention.

In this embodiment, during the BGM mode, based on the music information of audio data to be played back, effect processing including at least one of dynamic range compression, high/low band frequency cut, distortion addition, petit noise addition, or playback pitch change is performed on this audio data to be played back. This makes it possible, for example, to play back and output digitally-remastered old pieces of music with a sound quality as if the pieces of music were played back on an audio device (a record player, a cassette tape recorder, and the like) of those days. This can prevent the occurrence of a situation in which the user attentively listens to a digitally-remastered old piece of music with high sound quality, resulting in disturbing concentrating on his or her work or in interfering with falling asleep. Thus, according to this embodiment, it is possible to playback high-quality audio data in a sound quality suitable for BGM.

In addition, in this embodiment, it is determined whether or not the effect processing selected based on the music information of the audio data to be played back is required to be performed based on the analysis result of the sound quality of this audio data. Accordingly, further degradation of this audio signal being the playback signal can be prevented when the audio data to be played back originally has a sound quality suitable for BGM (for example, when the audio data is from an old piece of music that has not been digitally-remastered).

The present invention is not limited to the above-mentioned embodiment, and various modifications can be made thereto within the gist thereof.

For example, in the above-mentioned embodiment, the wireless audio player 1 selects the effect processing to be applied to the audio signal, which is the playback signal of this audio data, based on the release year of the piece of music contained in the music information of the audio data to be played back. However, the present invention is not limited thereto. The effect processing to be applied to the audio signal, which is the playback signal of this audio data, may be selected based on the genre of the piece of music contained in the music information of the audio data to be played back. For example, in the case of the genre of "classical," because classical music generally has a wider dynamic range, the effect processing of each of "dynamic range compression" and "playback pitch change" may be applied so that the sound can be played back without interruption even at low volume, and audio signals can be output with a sound quality as if the audio signals were being played back on a record player or a cassette tape recorder with large wow and flutter, thereby enabling playback in a sound quality suitable for BGM. Further, in the case of the genre of "rock," because rock music generally has a wider frequency bandwidth, the effect processing of each of "high/low band frequency cut" and "distortion addition" may be applied to output audio signals with a sound quality as if listening to an AM radio broadcast on aged speakers, for example, thereby enabling playing back in a sound quality suitable for BGM.

Further, in the above-mentioned embodiment, the wireless audio player 1 selects the effect processing to be applied to the audio signal, which is the playback signal of this audio data, based on the music information of the audio data to be played back. However, the present invention is not limited thereto. The wireless audio player 1 may be provided with a melody analysis unit that analyzes the melody of the audio data to be played back, and the effect processing unit 16 may select the effect processing to be applied to the audio signal based on the genre of the piece of music identified by the melody analyzed by the melody analysis unit. In this way, even when the music information of the audio data to be played back cannot be obtained from the media server 3, appropriate effect processing can be performed on the audio signal that is the playback signal of this audio data.

Further, in the above-mentioned embodiment, the wireless audio player 1 selects the effect processing) to be applied to the audio data to be played back from among dynamic range compression, high/low band frequency cut, distortion addition, petit noise addition, and playback pitch change. However, the present invention is not limited thereto. Any effect processing that can convert high-quality audio data into an audio signal with a sound quality suitable for BGM is acceptable. For example, the effect processing that can combine some of dynamic range compression, high/low band frequency cut, distortion addition, petit noise addition, and playback pitch change, to achieve a sound quality as if the audio data were played back on a record player using a moving magnet (MM) cartridge, and a sound quality as if the audio data were played back by a record player using a moving coil (MC) cartridge is prepared, and based on the analysis result of the music information or melody of the audio data to be played back, the effect processing to be applied to this audio data may be selected from among those kinds of effect processing.

In addition, in the above-mentioned embodiment, it is determined whether or not the effect processing selected based on the music information of the audio data to be played back is to be performed based on the analysis result of the sound quality of this audio data. However, the present invention is not limited thereto. For example, when the audio data distributed by the media server 3 is limited to high-resolution audio or other high-quality audio data, the processing of determining whether or not to perform effect processing based on the analysis result of the sound quality of the audio data may be omitted.

Further, in the above-mentioned embodiment, the wireless audio player 1 receives the operation mode setting instructions from the remote controller 2, but the present invention is not limited thereto. The wireless audio player 1 may be provided with an operation mode switching button, and may receive the operation mode setting instruction from the user via the switching button. Alternatively, the wireless audio player 1 may be equipped with a timer to set the operation mode to the BGM mode when the current time becomes a preset BGM mode transition time, and to set the operation mode to the normal mode when the current time becomes a preset normal mode transition time. Alternatively, the remote controller 2 may be equipped with a scheduler to monitor the user's schedule, and may transmit an operation mode setting instruction with BGM mode designation to the wireless audio player 1 at the timing when the current time shifts to the working or sleeping schedule and transmit an operation mode setting instruction with normal mode designation to the wireless audio player 1 at the timing when the current time leaves the working or sleeping schedule.

In the above-mentioned embodiment, the present invention has been described in the case applied to a wireless audio player as an example, but the present invention is not limited thereto. The present invention is widely applicable to audio devices capable of playing back high-quality audio data such as high-resolution audio.

### Reference Signs List

1: wireless audio player, 2: remote controller, 3: media server, 4: network, 5: access point, 10: wireless LAN interface unit, 11: instruction reception unit, 12: audio playback unit, 13: speaker unit, 14: music information acquisition unit, 15: sound quality analysis unit, 16: effect processing unit, 17: mode switching unit, 18: main control unit.

## Claims

1. An audio device for playing back and outputting audio data, the audio device comprising:
mode setting means for setting an operation mode to a normal mode or a background music (BGM) mode; and
effect processing means for performing, when the operation mode is set to the BGM mode by the mode setting means, based on music information or an analysis result of audio data to be played back, effect processing including at least one of dynamic range compression, high/low band frequency cut, distortion addition, petit noise addition, or playback pitch change, on the audio data to be played back.

2. The audio device according to claim 1, further comprising music information acquisition means for acquiring the music information of the audio data to be played back that has been downloaded from a media server that distributes the audio data to be played back,
wherein the effect processing means is configured to select effect processing to be applied to the audio data to be played back based on a release year or a genre of a piece of music contained in the music information acquired by the music information acquisition means.

3. The audio device according to claim 1, further comprising melody analysis means for analyzing a melody of the audio data to be played back,
wherein the effect processing means is configured to select effect processing to be applied to the audio data to be played back based on a genre of a piece of music identified by the melody analyzed by the melody analysis means.

4. The audio device according to any one of claims 1 to 3, further comprising sound quality analysis means for analyzing a sound quality of the audio data to be played back,
wherein the effect processing means is configured to change whether effect processing to be applied to the audio data to be played back, which has been selected based on the music information or the analysis result of the audio data to be played back, is required to be performed, based on the sound quality analyzed by the sound quality analysis means.

5. The audio device according to any one of claims 1 to 4, wherein the mode setting means is configured to set the operation mode in accordance with an instruction received via an operation button provided in the audio device or via a controller for remote control of the audio device.

6. A program for causing a computer to function as an audio device for playing back and outputting audio data, the program causing the computer to function as:
mode setting means for setting an operation mode to a normal mode or a background music (BGM) mode; and
effect processing means for performing, when the operation mode is set to the BGM mode by the mode setting means, based on music information or an analysis result of audio data to be played back, effect processing including at least one of dynamic range compression, high/low band frequency cut, distortion addition, petit noise addition, or playback pitch change, on the audio data to be played back.

7. An audio playback method of playing back audio data by an audio device,
the audio device having a normal mode and a background music (BGM) mode as operation modes,
the audio playback method comprising:
performing, when the operation mode is set to the BGM mode, based on music information or an analysis result of audio data to be played back, effect processing including at least one of dynamic range compression, high/low band frequency cut, distortion addition, petit noise addition, or playback pitch change, on the audio data to be played back; and
playing back and outputting the audio data to be played back that has been subjected to the effect processing.
